Europäisches Patentamt

European Patent Office

Office européen des brevets

(11) Numéro de publication: **0 309 603**
**B1**

(19)

(12) **FASCICULE DE BREVET EUROPEEN**

(45) Date de publication du fascicule du brevet:
**31.10.90**

(21) Numéro de dépôt: **87114298.0**

(22) Date de dépôt: **30.09.87**

(51) Int. Cl.⁵: **B60P 1/48**, B60P 1/64

(54) **Appareil de manutention à bras, notamment pour un camion ou pour une remorque.**

(43) Date de publication de la demande:
**05.04.89 Bulletin 89/14**

(45) Mention de la délivrance du brevet:
**31.10.90 Bulletin 90/44**

(84) Etats contractants désignés:
**AT BE CH DE ES FR GB IT LI LU NL SE**

(56) Documents cités:
**EP-A- 0 014 513**
**EP-A- 0 107 892**
**DE-A- 2 557 169**
**DE-A- 3 312 508**
**FR-A- 2 393 697**
**FR-A- 2 540 804**
**GB-A- 2 092 993**

(73) Titulaire: **INTERPATENT ANSTALT, Case Postale 34605, FL-9490 VADUZ(LI)**

(72) Inventeur: **Croisier, Jean-Paul, 61, rue du Rhône, CH-1204 Genève(CH)**

(74) Mandataire: **Robert, Jean S., 51, route du Prieur, CH-1257 Landecy (Genève)(CH)**

ACTORUM AG

## Description

L'invention concerne un appareil de manutention à bras destiné à être monté notamment sur un camion ou sur une remorque. Cet appareil est prévu pour manutentionner un conteneur, une benne, une palette de manutention, ou plus généralement une charge volumineuse quelconque.

Les appareils à bras de ce type comprennent généralement une potence rabattable actionnée par un ou plusieurs vérins de levage alors qu'elle comporte un crochet auquel est accroché l'avant du conteneur. Ces appareils à bras connus présentent généralement l'inconvénient de nécessiter dans le vérin ou les vérins de levage une force considérable au décollage, c'est-à-dire lorsque le conteneur étant posé horizontalement sur le camion, on commence à le soulever pour le basculer vers l'arrière afin de vider son contenu.

Il est connu p. ex. des documents EP-A1 0 014 513 ou GB-A 2 092 993, un appareil de manutention comportant une potence (ou un portique) rigide coudée dont l'un des bras se termine par le crochet de manutention alors que l'autre bras est articulé sur l'avant d'un bras rigide, lequel est articulé à son tour par son extrémité arrière, l'articulation arrière du bras rigide se trouvant à son tour sur l'avant d'une bielle dont l'arrière est finalement articulé sur l'arrière du châssis du camion. Pour pallier cet inconvénient, l'invention propose de prévoir trois vérins (ou trois groupes de vérins) hydrauliques, à savoir :

a) un premier vérin (oudeux vérins en parallèle) reliant l'extrémité avant du bras rigide à la potence coudée ;

b) un second vérin (ou deux seconds vérins en parallèle) reliant la partie centrale du cadre décolleur au châssis porteur du camion;

c) un troisième vérin (ou deux troisièmes vérins en parallèle) reliant l'extrémité avant du bras rigide au cadre décolleur.

L'invention prévoit encore de brancher en parallèle le second vérin et le troisième vérin sur une source d'alimentation sous pression : quand on envoie la pression simultanément dans les deuxième et troisième vérins, c'est le second vérin qui fonctionne en priorité du fait d'un couple plus important. Par interposition d'un étranglement hydraulique uniquement sur la branche de circuit alimentant le deuxième vérin, on absorbe les variations de pression.

L'invention comprend par ailleurs à l'avant de la bielle, des moyens permettant de verrouiller cette dernière de façon amovible avec le bras lorsqu'elle est dans le prolongement de celui-ci. Ainsi, la bielle, le bras et la branche inférieure de la potence coudée peuvent être placés et maintenus dans le prolongement les uns des autres, de façon à constituer un faux-châssis sensiblement plat qui peut être relevé par pivotement autour de l'axe arrière du châssis, notamment lorsqu'on veut relever et incliner le conteneur à la façon d'une benne basculante.

L'invention comprend également à l'avant de la bielle des moyens permettant de verrouiller cette dernière de façon amovible avec le châssis lorsque la potence coudée est repliée sur l'arrière, ceci quand on veut déposer un conteneur au sol ou le reprendre depuis le sol.

L'invention permet enfin de relever jusqu'à la verticale le faux-châssis basculant, précédemment constitué par la bielle, le bras rigide et la branche inférieure de la potence, si bien que l'appareil permet de poser verticalement sur le sol un silo ou toute charge analogue qu'il avait transportée sur le véhicule à la position horizontale.

Un mode de réalisation de l'appareil conformément à l'invention est représenté schématiquement sur les dessins annexés, à titre d'exemples non limitatifs.

La figure 1 est une vue latérale d'un appareil selon l'invention qui équipe un camion sur lequel se trouve un conteneur en position de transport.

Les figures 2 à 6 illustrent les phases successives de la manoeuvre consistant à déposer au sol le conteneur que transporte le camion et à le reprendre.

La figure 7 représente la manoeuvre de vidage du conteneur (bennage).

La figure 8 montre en variante la pose au sol d'un silo déchargé à la verticale.

La figure 9 est une vue de détail suivant la direction de la flèche IX (figure 4).

La figure 10 est un schéma hydraulique montrant le principe pour brancher les deuxième et troisième vérins en parallèle sur une même source de liquide sous pression.

La figure 11 schématise le système pour verrouiller le bras sur l'avant de la bielle.

La figure 12 schématise le système pour verrouiller la bielle sur le châssis en position verrouillée.

La figure 13 est une vue analogue pour la position déverrouillée.

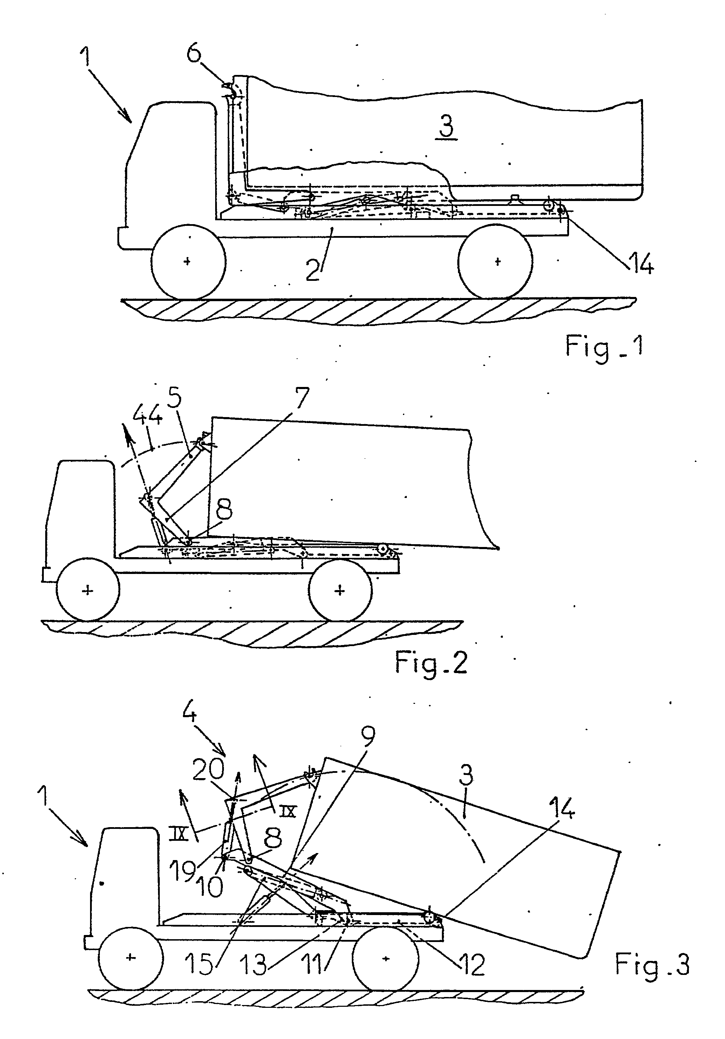

Le camion 1 montré sur les dessins comporte un châssis porteur 2 destiné à assurer le chargement et le transport d'un conteneur 3 (figure 1).

Pour cela, l'appareil de manutention 4 (figure 3) est fixé sur le châssis 2.

Cet appareil de manutention 4 comprend les éléments mécaniques suivants :

- une potence rigide coudée dont la branche supérieure 5 est surmontée par un crochet 6, alors que la branche inférieure 7 s'articule sur un axe horizontal 8 ;
- un bras rigide longitudinal 9 dont la partie avant porte l'axe 8 au-delà duquel il se prolonge pour porter un axe 10, alors que sa partie arrière s'articule sur un axe horizontal 11 ;
- une bielle longitudinale 12 dont l'avant porte l'axe 11 au-delà duquel elle se prolonge par un bec de verrouillage 13, alors que sa partie arrière s'articule par un axe 14 sur l'arrière du châssis 2 ;
- un cadre décolleur rigide 15 dont l'arrière s'articule par un axe 16 sur le châssis 2 et dont l'avant porte un axe 17, alors que sa partie centrale porte un axe 18.

L'appareil 4 comprend en outre les éléments hydrauliques suivants :

- un premier vérin 19 reliant l'axe 10 du bras 9 à un axe 20 solidaire de la potence 5-7, près de son point anguleux ;
- un second vérin 23 reliant l'axe central 18 du cadre décolleur 15, à un axe 24 porté par le châssis 2 en arrière de la cabine 25 du camion 1 ;
- un troisième vérin 21 articulé entre l'axe 17 du cadre décolleur 15, et un axe 22 porté par le bras 9 peu en avant de son axe arrière 11.

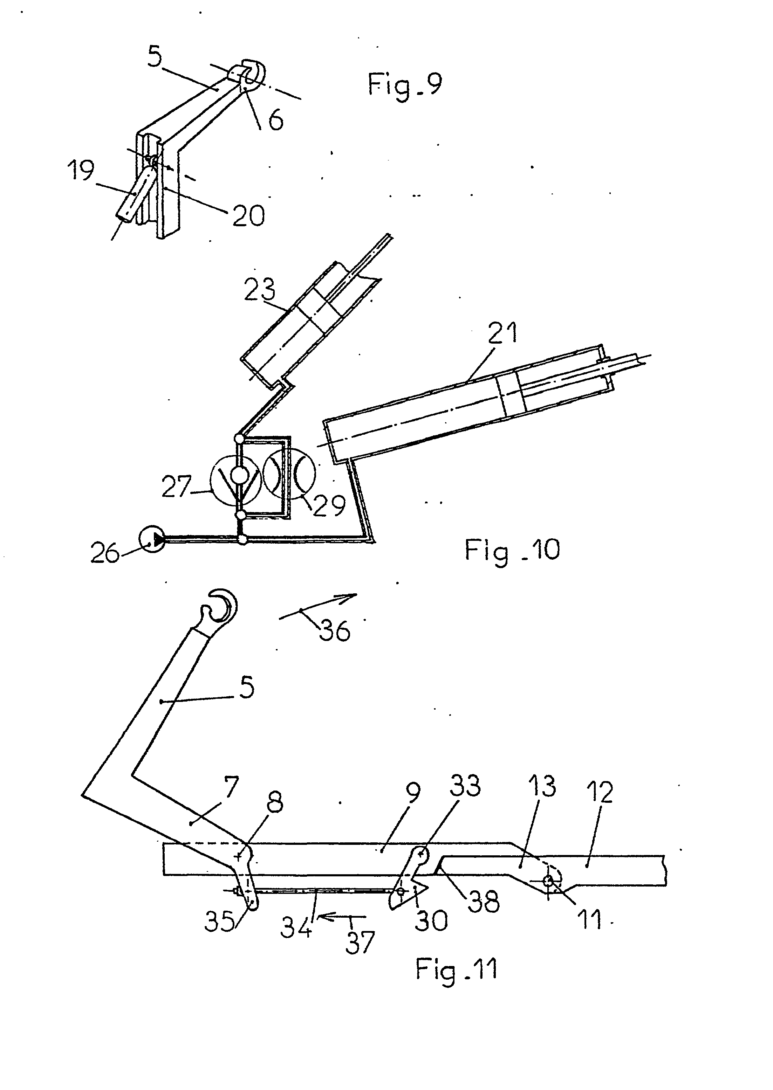

Le second vérin 23 et le troisième vérin 21 sont branchés en parallèle sur une source commune d'alimentation sous pression 26 ( figure 10) .De plus , un étranglement hydraulique 29 est intercalé sur l'alimentation du seul second vérin 23 . En parallèle avec l'étranglement 29 , on prévoit aussi un clapet anti-retour 27 . Comme cela apparaît sur la figure 10 , les éléments 27 et 29 intéressent uniquement l'alimentation du second vérin 23 ,sans concerner celle du troisième vérin 21 . On évite ainsi tout transfert du vérin 21 , si bien que , lorsqu'on envoie la pression simultanément dans les deuxième 23 et troisième 21 vérins , c'est le deuxième vérin 23 qui fonctionne en priorité ,bénéficiant d'un couple plus important .

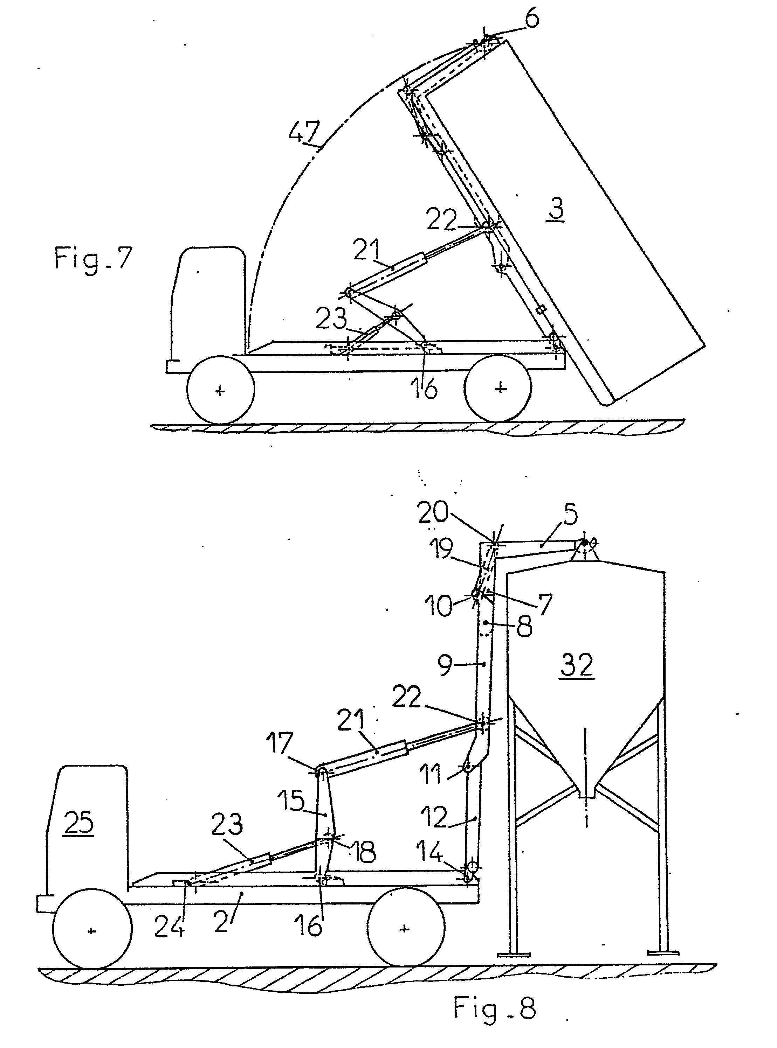

La bielle 12 comporte une partie avant 13 qui la prolonge au-delà de l'axe 11 . Pour verrouiller la bielle 12 de façon amovible sur le bras 9 lorsqu'elle est dans le prolongement de celui-ci (figures 7 et 8) , on prévoit un cliquet de verrouillage 30 , articulé par un axe 33 sur l'arrière du bras 9 ( figure 11). Ce cliquet 30 est relié par une tige de liaison 34 à un doigt de commande 35 qui prolonge au-delà de son axe 8, la branche 7 de la potence. Ainsi , on voit sur la figure 11 , que :

- si la potence 5 , 7 est rabattue vers l'arrière (flèche 36) , la tige 34 est tirée vers l'avant (flèche 37), si bien que le cliquet 30 est dégagé hors du bec 38 de la partie avant 13 ; le bras 9 est alors libre de tourner autour de son axe 11 , indépendamment de la bielle 12 ;
- si la potence 5 , 7 est rabattue vers l'avant ( figures 1 , 7 et 8) , alors le bras 9 se trouve dans le prolongement de la bielle 12 avec laquelle il est verrouillé par engagement du cliquet 30 sous le bec 38 ; dans ce cas , la bielle 12 , le bras 9 et la branche inférieure 7 de la potence sont placés et maintenus dans le prolongement les uns des autres , de façon à constituer un faux-châssis sensiblement plat qui peut être relevé par pivotement autour de l'axe arrière 14 du châssis 2 ,notamment lorsqu'on veut relever et incliner le conteneur 3 à la façon d'une benne basculante ( figure 7).

Le mécanisme de verrouillage à cliquet 30 qui vient d'être décrit ( figure 11) a un fonctionnement automatique.

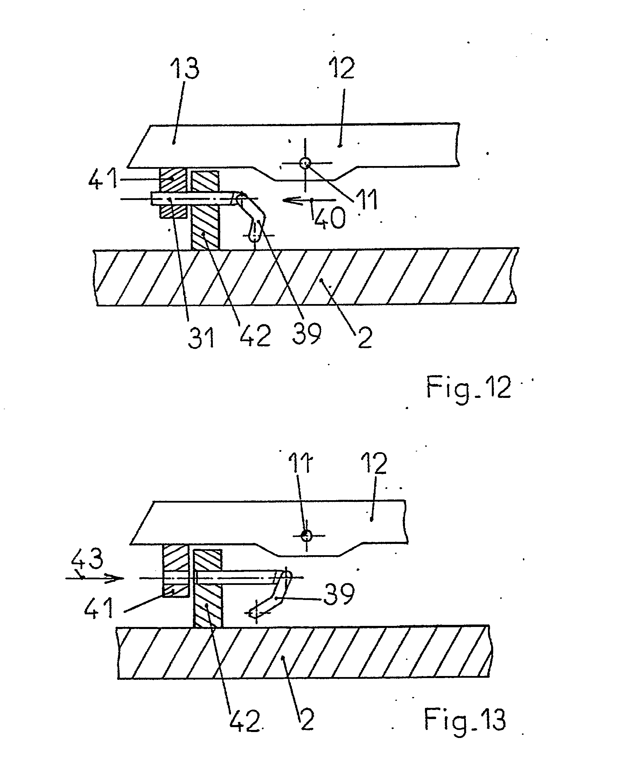

Par ailleurs , on peut aussi prévoir un mécanisme à broche coulissante 31 ( figures 12 et 13) qu'un levier de commande 39 peut solliciter à volonté :

- ou bien en position active ( flèche 40 , figure 12) , pour solidariser une chape 41 de la partie avant 12, et une chape 42 du châssis 2 ; la bielle 12 est alors fixée au châssis 2 (figures 1 à 6) ;
- ou bien en position escamotée (flèche 43, figure 12) auquel cas , la bielle 12 peut être librement relevée autour de son axe 11 :

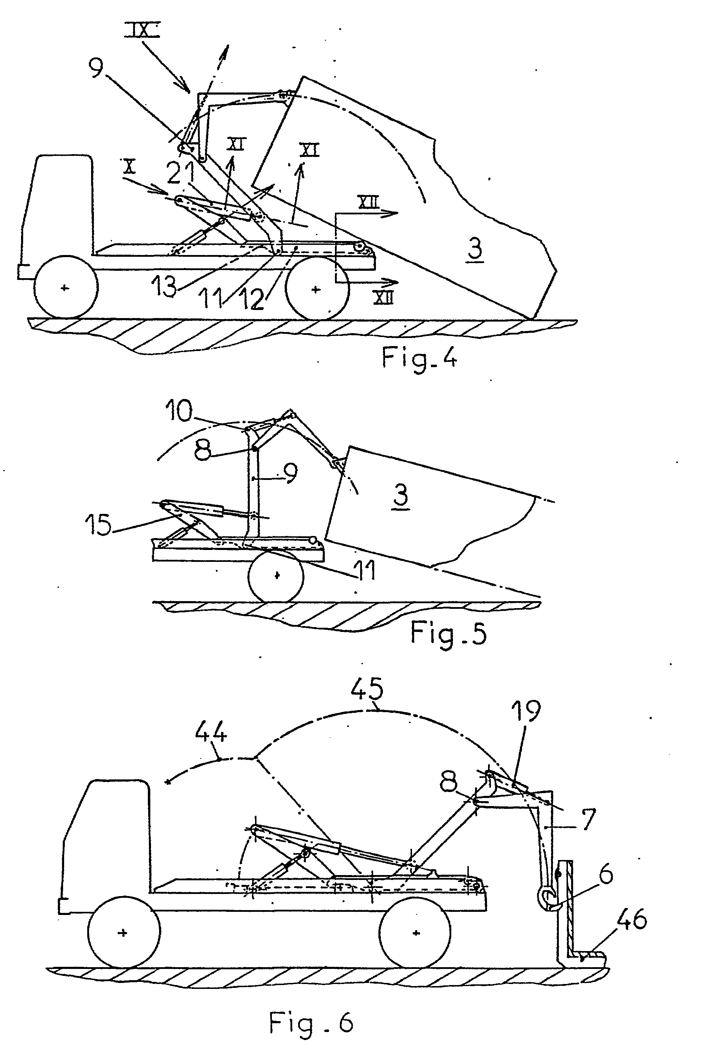

En fonctionnement, si l'on commence par alimenter le vérin 19 tout en laissant verrouillée la broche 31 (Figure 12), on observe les phases suivantes :
- la potence 5-7 bascule vers l'arrière (Figure 2) ce qui par ailleurs déverrouille le bec 38 de la bielle 12 ; le crochet 6 décrit un arc de cercle 44 autour de l'axe 8 ;
- le vérin 23 se développe alors (Figure 3), ce qui soulève le cadre décolleur 15 ; le crochet 6 décrit la première partie d'un arc de cercle 45 autour de l'axe 11 ;
- le vérin 21 se développe enfin (Figures 4 et 6) et le crochet continue sa trajectoire sur l'arc de cercle 45, jusqu'à ce que le crochet 6 ait posé au sol sa charge qui peut être constituée par le conteneur 3 ou par un plateau de manutention 46.

Par contre, si à partir de la position de la figure 1 on laisse verrouillée la broche 31 (Figure 12) et on actionne directement le vérin 21 (sans allongement préalable du vérin 19), les éléments 7, 9, 12 restent rigidement dans le prolongement les uns des autres à la façon d'un faux-châssis (Figures 7 et 8). Le crochet 6 décrit alors un seul arc de cercle 47 autour de l'axe arrière 14. Le conteneur 3 est soulevé à la façon d'une benne basculante.

L'une des caractéristiques du dispositif apparait sur la Figure 8 : le faux-châssis 7, 9, 12 peut être relevé jusqu'à la verticale. Ainsi, si une charge telle qu'un silo 32 a été transportée à l'horizontale sur le camion 1 (position du conteneur 3 sur la Figure 1), le dispositif permet de la déposer au sol directement à sa position verticale d'utilisation (Figure 8).

## Revendications

1 - Appareil de manutention pour un camion (1) ou analogue, comportant une potence rigide coudée (5), (7) dont l'un des bras (5) se termine par le crochet de manutention (6), alors que l'autre bras (7) est articulé en (8) sur l'avant d'un bras rigide (9), lequel est articulé à son tour en (11) par son extrémité arrière, l'articulation arrière (11) du bras rigide (9) se trouvant à son tour sur l'avant d'une bielle (12) dont l'arrière est finalement articulé en (14) sur l'arrière du châssis (2) du camion (1), caractérisé en ce que sont prévus trois vérins hydrauliques (ou groupes de vérins montés en parallèle) à savoir :
   a) un premier vérin (19) reliant un axe (10) sur l'extrémité avant du bras rigide (9) à un axe (20) de la potence coudée (5), (7) ;
   b) un second vérin (23) reliant un axe (18) de la partie centrale d'un cadre décolleur (15) à un axe (24) du châssis porteur (2) du camion (1).;
   c) un troisième vérin (21) articulé entre un axe (22) de la partie arrière du bras rigide (9) et un axe (17) de l'extrémité avant du cadre décolleur (15) dont l'extrémité arrière s'articule en (16) sur le châssis (2) du camion (1).

2 - Appareil de manutention selon la revendication 1, caractérisé en ce que le second vérin (23) et le troisième vérin (21) sont branchés en parallèle sur une source commune d'alimentation sous pression (26) (avec interposition d'un étranglement hydraulique (29) évitant le transfert du vérin (23) dans le vérin (21) ), si bien que lorsqu'on envoie la pression simultanément dans les deuxième (23) et troisième (21) vérins, c'est le deuxième vérin (23) qui fonctionne en priorité, bénéficiant d'un couple plus important.

3 - Appareil de manutention suivant l'une quelconque des revendications 1 et 2, caractérisé en ce qu'à l'avant (13) de la bielle (12) sont prévus des moyens permettant de verrouiller cette dernière de façon amovible avec le bras (9) lorsqu'elle est dans le prolongement de celui-ci, si bien qu'alors la bielle (12), le bras (9) et la branche inférieure (7) de la potence peuvent être placés et maintenus dans le pro longement les uns des autres, de façon à constituer un faux-châssis sensiblement plat qui peut être relevé par pivotement autour de l'axe arrière (14) du châssis (2) notamment lorsqu'on veut relever et incliner le conteneur (3) à la façon d'une benne basculante.

4 - Appareil de manutention suivant la revendication 3, caractérisé en ce que sur le châssis (2) sont prévus des moyens pour verrouiller la partie avant (13) de la bielle (12), si bien que celle-ci est maintenue à l'horizontale sur le châssis (2) lorsqu'on effectue une rotation du bras (9) pour venir prendre un conteneur au sol.

5 - Appareil de manutention suivant la revendication 3, caractérisé en ce qu'il permet de relever jusqu'à la verticale le faux-châssis basculant constitué par la bielle (12), le bras rigide (9) et la branche inférieure (7) de la potence, si bien que l'appareil permet de poser verticalement sur le sol un silo (32) ou toute charge analogue qu'il avait transportée sur le véhicule (1) à la position horizontale.

**Claims**

11. Handling equipment for a truck (1) or the same, comprising a rigid crank jib (5), (7) one of the arms (5) of which is ended by the handling hook (6) while the other arm (7) is articulated at (8) on the front portion of a rigid arm (9) which is on its side articulated at (11) by its rear end, the rear articulation (11) of the rigid arm (9) being on its side situated at the front of a connecting-rod (12) the rear part of which is finally articulated at (14) on the rear of the frame .(2) of the truck (1), characterized in that three hydraulic jacks (or groups of jacks mounted in parallel) are provided, i.e.:

a) a first jack (1) connecting a shaft (10) on the front end of the rigid arm (9) to a shaft (20) of the crank jib (5), (7);

b) a second jack (23) connecting a shaft (18) of the central portion of a lifting frame (15) to a shaft (24) of the carrying frame (2) of the truck (1);

c) a third jack (21) articulated between a shaft (22) of the rear portion of the rigid arm (9) and a shaft (17) of the front end of the lifting frame (15), the rear end of which is articulated at (16) on the frame (2) of the truck (1).

2. Handling equipment according to claim 1, characterized in that the second jack (23) and the third jack (21) are mounted in parallel on a common source of feeding under pressure (26) (with interposition of an hydraulic throttling (29) preventing the transfer of the jack (23) into the jack (21)), so that when one sends the pressure simultaneously into the second (23) and third (21) jacks, it is the second jack (23) which operates the first one, profiting of a more important torque.

3. Handling equipment according to anyone of claims 1 and 2, characterized in that at the front (13) of the connecting-rod (12) are provided means permitting to lock the latter removably with the arm (9) when it is situated in the prolongation of the latter, so that at this time the connecting-rod (12), the arm (9) and the lower branch (7) of the jib can be placed and maintained in the prolongation to each other so as to constitute a false frame substantially flat which can be lifted by rocking around the rear shaft (14) of the frame (2) especially when one desires lifting and inclining a container (3) like a rocking bucket.

4. Handling equipment according to claim 3, characterized in that on the frame (2) are provided means for locking the front portion (13) of the connecting-rod (12) so that the latter is maintained horizontally on the frame (2) when one effects a rotation of the arm (9) for picking up a container on the ground.

5. Handling equipment according to claim 3, characterized in that it permits to lift up to the vertical the rocking false frame constituted by the connecting-rod (12) the rigid arm (9) and the lower branch (7) of the jib, so that the apparatus permits to put vertically on the ground a silo (32) or any analogous load it has transported on the vehicle (1) in the horizontal position.

**Patentansprüche**

1. Lade- und Ablade-Vorrichtung für einen Lastkraftwagen oder-dergleichen, mit einem abgewinkelten starren Ausleger (5, 7), dessen einer Arm (5) in einem Transporthaken (6) endet, wogegen der andere Arm (7) bei (8) am vorderen Ende eines starren Armes (9) angelenkt ist, wobei dieser starre Arm (9) seinerseits bei (11), an seinem hinteren Ende, angelenkt ist, und wobei die hintere Anlenkung (11) des starren Armes (9) sich ihrerseits am vorderen Ende einer Pleuelstange (12) befindet, deren hinteres Ende schließlich bei (14) am Heck des Lastkraftwagenchassis (2) angelenkt ist, dadurch gekennzeichnet, daß drei hydraulische Preßtöpfe (oder Gruppen von parallel zueinander angeordneten hydraulischen Preßtöpfen) vorgesehen sind, nämlich

a) ein erster Preßtopf (19), welcher eine am Vorderende des starren Armes (9) angeordnete Achse (10) mit einer Achse (20) des abgewinkelten Auslegers (5, 7) verbindet;

b) ein zweiter Preßtopf (23), welcher eine Achse (18) des Mittelteiles eines Abhebrahmens (15) mit einer Achse (24) des Tragchassis (2) des Lastkraftwagens (1) verbindet;

c) ein dritter Preßtopf (21), der zwischen einer Achse (22) des hinteren Teiles des starren Armes (9) einerseits und einer Achse (17) des Vorderendes des Abhebrahmens (15) angelenkt ist, dessen Hinterende bei (16) auf dem Chassis (2) des Lastkraftwagens (1) angelenkt ist.

2. Vorrichtung nach Anspruch 1, dadurch gekennzeichnet, daß der zweite Preßtopf (23) und der dritte Preßtopf (21) parallel auf eine gemeinsame Druckquelle (26) geschaltet sind (mit Zwischenschaltung einer hydraulischen Drosselung (29), um die Übertragung vom Preßtopf (23) in den Preßtopf (21) zu vermeiden), so daß dann, wenn man gleichzeitig den zweiten (23) und den dritten (21) Preßtopf mit Druck beaufschlagt, der zweite Preßtopf (23) als erster arbeitet, da er ein größeres Kräftepaar erfährt.

3. Vorrichtung nach einem der Ansprüche 1 und 2, dadurch gekennzeichnet, daß am vorderen Ende (13) der Pleuelstange (12) Mittel vorgesehen sind, um diese Pleuelstange lösbar mit dem Arm (9) dann zu verriegeln, wenn sie in seiner Verlängerung steht, so daß dann, wenn die Pleuelstange (12), der Arm (9) und der untere Arm (7) des Auslegers in eine miteinander fluchtende Stellung gestellt und gehalten werden, sie einen Nebenrahmen darstellen, welcher im wesentlichen eben ist und durch Schwenken um die hintere Achse (14) des Chassis (2) insbesondere dann angehoben werden kann, wenn man den Container (3) in der Art eines Schwenkkübels lieben und neigen will.

4. Vorrichtung nach Anspruch 3, dadurch gekennzeichnet, daß auf dem Chassis (2) Mittel vorgesehen sind, um den Vorderteil (13) der Pleuelstange (12) zu verriegeln, so daß diese horizontal auf dem Chassis festgehalten ist wenn man den Arm (9) schwenkt, um am Boden einen Container zu ergreifen.

5. Vorrichtung nach Anspruch 3, dadurch gekennzeichnet, daß sie es ermöglicht, den schwenkbaren Nebenrahmen bis zur Vertikalen anzuheben, wobei dieser Nebenrahmen aus der Pleuelstange (12), dem starren Arm (9) und dem unteren Arm (7) des Auslegers besteht, so daß mit der Vorrichtung ein Silo (32) oder jede entsprechende Last, welche von der Vorrichtung auf dem Fahrzeug (1) in horizontaler Stellung transportiert wurde, auf den Boden gestellt werden kann.

Fig _ 1

Fig. 2

Fig. 3

Fig. 4

Fig. 5

Fig. 6

Fig.7

Fig.8

Fig.9

Fig.10

Fig.11

13    12

41

11

40

31   42   39   2

Fig. 12

11    12

43

41

39

42   2

Fig. 13